# EUROPÄISCHE PATENTSCHRIFT

(11) **EP 3 672 028 B1**
(45) Veröffentlichungstag und Bekanntmachung des Hinweises auf die Patenterteilung: **01.09.2021**
(21) Anmeldenummer: 19212835.3
(22) Anmeldetag: 02.12.2019
(51) Int. Cl.: H02K 1/27

(54) **ROTORBLECH, ROTOR UND ELEKTRISCHE MASCHINE SOWIE VERFAHREN ZUR HERSTELLUNG EINES ROTORS**
ROTOR PLATE, ROTOR AND ELECTRIC MACHINE AND METHOD FOR PRODUCING A ROTOR
TÔLE DE ROTOR, ROTOR ET MACHINE ÉLECTRIQUE, AINSI QUE PROCÉDÉ DE FABRICATION D'UN ROTOR

(30) Priorität: 17.12.2018 DE 102018132502
(43) Veröffentlichungstag der Anmeldung: 24.06.2020
(73) Patentinhaber: Valeo Siemens eAutomotive Germany GmbH, 91056 Erlangen (DE)
(72) Erfinder: TAN, Kae Shyuan, 97464 Niederwerrn (DE)
(74) Vertreter: Dr. Gassner & Partner mbB

(56) Entgegenhaltungen:
- EP-A1- 3 352 331
- CN-A- 108 711 977
- CN-A- 108 847 731
- DE-A1-102016 209 711
- JP-A- 2005 184 957
- US-B2- 8 587 175

## Beschreibung

Die vorliegende Erfindung betrifft ein Rotorblech für eine permanenterregte elektrische Maschine. Daneben betrifft die Erfindung einen Rotor für eine permanenterregte elektrische Maschine, eine elektrische Maschine für ein Fahrzeug und ein Verfahren zur Herstellung eines Rotors.

Das Dokument DE 10 2016 209 711 A1 offenbart einen magnetisch leitfähigen Rotorkern eines Rotors einer permanenterregten elektrischen Maschine. Je Magnetpol sind zwei in einer "V"-förmigen Gestaltung, die sich zu einer Rotoraußenfläche hin öffnet, angeordnete Dauermagnete und eine symmetrisch zu der "V-förmigen" Gestaltung angeordnete Gruppe von Ausnehmungen im Rotorkern vorgesehen. Die Gruppe umfasst u. a. eine dritte und eine vierte kleine Ausnehmung, die im Wesentlichen viereckig und symmetrisch zu einer radialen Mittelachse gestaltet und ausgerichtet sind.

Das Dokument EP 3 352 331 A1 offenbart ein Rotorblech für einen permanenterregten Elektromotor mit mehreren in umfänglichen Anordnungen in das Rotorblech eingebrachten, länglichen Ausnehmungen zur Aufnahme von Permanentmagneten, wobei die Ausnehmungen derart orientiert sind, dass jede Ausnehmung schräg bezüglich einer radialen Richtung verläuft, wobei zur Ausbildung eines Rotorpols jeweils zwei in Umfangsrichtung benachbart und zueinander V-förmig angeordnete Ausnehmungen vorgesehen sind, die spiegelsymmetrisch bezüglich einer dazwischenliegenden und in radialer Richtung verlaufenden Spiegelachse angeordnet sind.

Um eine hohe Leistungsdichte zu erreichen, müssen elektrische Maschinen mit einem Rotorblechpaket aus derartigen Rotorblechen bei einer hohen Drehzahl betrieben werden können. Je höher die Drehzahl ist, desto stärker muss das Rotorblech bzw. das Rotorblechpaket mechanischen Spannung standhalten, die von durch das Gewicht von permanentmagnetischen Magnetelementen und einem Eigengewicht des Rotorblechpakets verursachten Zentrifugalkräften einerseits und von einer auch im Ruhezustand gegebenen Belastung durch einen Presssitz des Rotorblechpakets auf einer Welle andererseits erzeugt werden. Folglich ist die Drehzahl der elektrischen Maschine so zu begrenzen, dass die mechanischen Spannungen Maximalwerte für die mechanische Widerstandsfähigkeit des Rotorblechs nicht überschreiten. Dies beschränkt jedoch gleichzeitig die Ausnutzung bzw. Leistungsfähigkeit der elektrischen Maschine oder erfordert eine entsprechend widerstandsfähigere und aufwändigere Ausgestaltung des Rotorblechpakets.

Das Dokument US 9 246 363 B2 offenbart eine rotierende elektrische Maschine mit einem aus Rotorblechen zusammengesetzten Rotor mit Schenkelpolen. Die Pole haben ein oder mehrere Löcher, die derart angeordnet sind, dass sie eine Spitzenbelastung der Einzelbleche reduzieren, wenn sich der Rotor dreht.

Der Erfindung liegt die Aufgabe zugrunde, eine Möglichkeit zum mechanisch robusteren Betrieb einer permanenterregten elektrischen Maschine anzugeben.

Zur Lösung dieser Aufgabe ist erfindungsgemäß ein Rotorblech gemäß Anspruch 1vorgesehen.

Die Erfindung beruht auf der Erkenntnis, dass Bereiche eines jeweiligen Sektors, in denen die Magnettaschendurchgangsöffnungen der beiden Halbsektoren nahe beieinander liegen, strukturell besonders schwach sind und dass sich durch Zentrifugalkräfte auftretende mechanische Spannungen besonders in diesen Bereichen konzentrieren. Durch das Einbringen der Entlastungsdurchgangsöffnung kann eine signifikante Reduzierung der mechanischen Spannung in den Bereichen erzielt werden, wenn diese unrund ist, so dass sie sich in das inkreisfreie Trapez einbeschreiben lässt, und das Trapez mitsamt der einbeschriebenen Entlastungsdurchgangsöffnung gegenüber der Magnettaschendurchgangsöffnung derart verkippt ist, dass die erste und zweite Gerade jeweils einen Winkelabstand aufweisen, der größer als der Magnettaschenwinkelabstand ist. Dadurch wird die mechanische Spannung in andere, strukturell stärkere Bereiche des Sektors verlagert, so dass sich eine Reduktion der mechanischen Spannung im strukturell schwachen Bereich ergibt.

Das erfindungsgemäße Rotorblech zeichnet sich somit vorteilhafterweise durch eine höhere mechanische Robustheit aus. Damit kann eine elektrische Maschine gebildet werden, die bei ansonsten gleicher Dimensionierung mit einer höheren Drehzahl bis zum Erreichen eines Maximalwerts der mechanischen Spannung in den strukturell schwachen Bereichen betrieben werden kann oder die umgekehrt bei einer Auslegung auf eine vorgegebene maximale Drehzahl mechanisch weniger widerstandsfähig dimensioniert werden kann, was den Fertigungsaufwand senkt. Alternativ oder zusätzlich kann wegen der reduzierten durch Zentrifugalkräfte verursachten mechanischen Spannungen ein größerer Toleranzbereich für die Bildung eines Presssitzes vorgesehen werden. Bei einer höheren Widerstandsfähigkeit gegen Zentrifugalkräfte kann nämlich eine größere mechanische Spannung durch den Presssitz, die bereits im Ruhezustand gegeben ist, zugelassen werden.

Unter der Formulierung "einbeschrieben" ist im erfindungsgemäßen Sinne zu verstehen, dass die Entlastungsdurchgangsöffnung durch die Seiten des Trapezes, also durch die Schenkel und die Grundseiten begrenzt ist und jede Seite an zumindest einem Punkt berührt. Der Begriff "inkreisfrei" bedeutet im erfindungsgemäßen Sinne, dass kein Kreis in das Trapez einbeschrieben werden kann. Mit anderen Worten ist das Trapez kein Tangentenviereck. Der Begriff "Winkelabstand" bezeichnet im erfindungsgemäßen Sinne ein gerichtetes Winkelmaß in einer Ebene des Rotorblechs, die vollständig durch die Entlastungsdurchgangsöffnung durchsetzt ist. Die Orientierung aller Winkelabstände in der Ebene ist dabei identisch.

Das Rotorblech als Ganzes ist typischerweise kreisrund, es weist also typischerweise eine kreisförmige Randkontur auf. Das Rotorblech ist typischerweise aus einem weichmagnetischen Material gefertigt. Ein Abstand zwischen den parallelen Randlinien der Magnettaschendurchgangsöffnung ist typischerweise geringer, insbesondere mindestens um den Faktor 2 geringer, als die Länge der Randlinien. An einen durch die Randlinien begrenzten rechteckigen Aufnahmebereich für ein Magnetelement kann sich ferner zentrallinienseitig ein zusätzlicher Freiraum anschließen, der in einem montierten Zustand nicht durch ein Magnetelement ausgefüllt ist. Zwischen einer Randlinie und dem Freiraum kann ein Absatz ausgebildet sein. Der Freiraum kann eine im Wesentlichen dreieckige Form aufweisen, wobei eine, insbesondere radial innerste, Ecke abgerundet sein kann. Typischerweise bildet der Freiraum den radial innersten Punkt der Magnettaschendurchgangsöffnung aus. Für diesen kann das zuvor zum ersten Freiraum Gesagte analog gelten. Auf der dem Aufnahmebereich gegenüberliegenden Seite kann ferner ein weiterer Freiraum ausgebildet sein. Der Winkelabstand der Erstreckungsrichtung von der Zentrallinie aus beträgt typischerweise wenigstens 40°, bevorzugt wenigstens 45°, besonders bevorzugt wenigstens 50°, und/oder höchstens 89°, bevorzugt höchstens 75°, besonders bevorzugt höchstens 60°.

Bei dem erfindungsgemäßen Rotorblech ist ferner vorgesehen, dass die Entlastungsdurchgangsöffnung eine erste Randlinie aufweist, die sich zumindest entlang eines Teils der ersten Geraden erstreckt, und/oder eine zweite Randlinie aufweist, die sich zumindest entlang eines Teils der zweiten Geraden erstreckt.

Eine besonders hohe Entlastung wird erreicht, wenn ein Verhältnis einer größten Strecke, die lotrecht auf der ersten Randlinie errichtetet ist und auf der zweiten Randlinie endet, zu einer kleinsten Strecke, die lotrecht auf der ersten Randlinie errichtetet ist und auf der zweiten Randlinie endet, wenigstens 1,00, bevorzugt wenigstens 1,15, besonders bevorzugt wenigstens 1,30, beträgt. Alternativ oder zusätzlich kann das Verhältnis der größten Strecke, die lotrecht auf der ersten Randlinie errichtetet ist und auf der zweiten Randlinie endet, zu der kleinsten Strecke, die lotrecht auf der ersten Randlinie errichtetet ist und auf der zweiten Randlinie endet, höchstens 2,60, bevorzugt höchstens 2,10, besonders bevorzugt höchstens 1,85, betragen. Die Entlastungsdurchgangsöffnung weist bei einem solchen Verhältnis vorteilhafterweise im Wesentlichen eine in Umfangsrichtung längliche Gestalt auf.

Besonders bevorzugt sind die erste Randlinie und die zweite Randlinie durch einen bogenförmigen Randabschnitt verbunden. Typischerweise berührt der bogenförmigen Randabschnitt die erste Grundseite nur an einem Punkt. Es ist jedoch auch denkbar, dass der bogenförmigen Randabschnitt sich teilweise entlang der ersten Grundseite erstreckt und von dort bogenförmig in die erste Randlinie und/oder die zweite Randlinie übergeht.

Empirisch wurde herausgefunden, dass eine Differenz zwischen dem ersten Winkelabstand und dem Magnettaschenwinkelabstand zweckmäßigerweise wenigstens 23,5°, bevorzugt wenigstens 25°, besonders bevorzugt wenigstens 26,5°, und/oder höchstens 45°, bevorzugt höchstens 38°, besonders bevorzugt höchstens 31°, beträgt. Alternativ oder zusätzlich kann eine Differenz zwischen dem zweiten Winkelabstand und dem Magnettaschenwinkelabstand wenigstens 12°, bevorzugt wenigstens 15°, besonders bevorzugt wenigstens 21°, und/oder höchstens 30°, bevorzugt höchstens 25°, besonders bevorzugt höchstens 24°, betragen.

Typischerweise beträgt der erste Winkelabstand höchstens 120°, bevorzugt höchstens 100°, besonders bevorzugt höchstens 90°.

Zweckmäßigerweise beträgt ein Verhältnis eines Abstands der ersten Grundseite von der Zentrallinie zu einem Abstand des radial innersten Punkt der Magnettaschendurchgangsöffnung von der Zentrallinie wenigstens 0,60, bevorzugt wenigstens 1,2, besonders bevorzugt wenigstens 1,9, und/oder höchstens 2,5, bevorzugt höchstens 2,3, besonders bevorzugt höchstens 2,2.

Es ist beim erfindungsgemäßen Rotorblech ferner vom Vorteil, wenn ein Verhältnis eines äußeren Radialabstands des radial äußersten Punkts der Entlastungsdurchgangsöffnung zu einem Außenradius des Rotorblechs wenigstens 0,21, bevorzugt wenigstens 0,25, besonders bevorzugt wenigstens 0,27, und/oder höchstens 0,32, bevorzugt höchstens 0,30, besonders bevorzugt höchstens 0,29, beträgt.

Es kann beim erfindungsgemäßen Rotorblech ferner vorgesehen sein, dass ein Verhältnis eines inneren Radialabstands des radial innersten Punkts der Entlastungsdurchgangsöffnung zu einem Außenradius des Rotorblechs wenigstens 0,55, bevorzugt wenigstens 0,60, besonders bevorzugt wenigstens 0,62, und/oder höchstens 0,70, bevorzugt höchstens 0,68, besonders bevorzugt höchstens 0,65, beträgt.

Gemäß einer besonders bevorzugten Ausgestaltungsform des erfindungsgemäßen Rotorblechs ist vorgesehen, dass die Entlastungsdurchgangsöffnung eine weitere Randlinie aufweist, die auf zumindest einem Teil einer dritten Geraden liegt, die den zweiten Schenkel und die zweite Grundseite schneidet. Typischerweise wird die weitere Randlinie durch einen bogenförmigen Abschnitt mit der ersten Randlinie und oder durch einen bogenförmigen Abschnitt mit der zweiten Randlinie verbunden. Ein Winkelabstand der dritten Geraden von der Erstreckungsrichtung der Randlinien der Magnettaschendurchgangsöffnung beträgt bevorzugt wenigstens 60° und höchstens 150°, wobei bei einer bevorzugten Ausgestaltung der Winkelabstand zwischen 60 und 75° beträgt.

Um eine besonders vorteilhafte Doppel-V-Anordnung von Magnetelementen zu ermöglichen kann bei dem erfindungsgemäßen Rotorblech vorgesehen sein, dass die erste Durchgangsöffnungsanordnung, eine weitere Magnettaschendurchgangsöffnung, die zwei parallele, sich entlang einer weiteren Erstreckungsrichtung erstreckende Randlinien aufweist, wobei Geraden, auf denen jeweils eine Randlinie der weiteren Magnettaschendurchgangsöffnung liegt, die Zentrallinie radial weiter außen schneiden als Geraden, auf denen jeweils eine Randlinie der ersten Magnettaschendurchgangsöffnung liegt. Insbesondere kann auch die weitere Magnettaschendurchgangsöffnung die zuvor beschriebenen Freiräume aufweisen. Typischerweise ist der Abstand zwischen den Randlinien der weiteren Magnettaschendurchgangsöffnung kleiner als der Abstand der Randlinien der ersten Magnettaschendurchgangsöffnung.

Um einen möglichst ruhigen Betrieb der elektrischen Maschine zu ermöglichen, kann das erfindungsgemäße Rotorblech ferner wenigstens eine, insbesondere zur ersten Durchgangsöffnungsanordnung gehörende, Auswuchtungsdurchgangsöffnung, deren radial innerster Punkt weiter innen liegt als der radial innerste Punkt der Entlastungsdurchgangsöffnung, umfassen. Typischerweise ist die oder eine jeweilige Auswuchtungsdurchgangsöffnung kreisrund. Bevorzugt sind zwei Auswuchtungsdurchgangsöffnungen vorgesehen, die eine unterschiedliche Fläche aufweisen.

Die der Erfindung zu Grunde liegende Aufgabe wird ferner gelöst durch einen Rotor für eine permanenterregte elektrische Maschine gemäß Anspruch 10.

Die der Erfindung zu Grunde liegende Aufgabe wird ferner gelöst durch eine elektrische Maschine für ein Fahrzeug nach Anspruch 11.

Daneben wird die der Erfindung zu Grunde liegende Aufgabe durch ein Verfahren zur Herstellung eines Rotors für eine permanenterregte elektrische Maschine nach Anspruch 12.

Bei dem erfindungsgemäßen Verfahren kann vorgesehen sein, dass das Rotorblechpaket durch Einbringen wenigstens eines Auswuchtungsgewichts in die Auswuchtungsdurchgangsöffnungen wenigstens einer Durchgangsöffnungsanordnung eines jeweiligen Rotorblechs ausgewuchtet wird. Dadurch wird ein sogenanntes positives Auswuchten des Rotorblechpaket bzw. des Rotors realisiert.

Alternativ oder zusätzlich kann das Rotorblechpaket durch Ausbilden wenigstens einer Durchgangsöffnung durch die angeordneten Rotorbleche ausgewuchtet werden. So wird ein negatives Auswuchten des Rotorblechpaket bzw. des Rotors realisiert.

Sämtliche Ausführungen zum erfindungsgemäßen Rotorblech lassen sich analog auf den erfindungsgemäßen Rotor, die erfindungsgemäße elektrische Maschine und das erfindungsgemäße Verfahren übertragen, so dass auch mit diesen die zuvor erwähnten Vorteile erzielt werden können.

Weitere Vorteile und Einzelheiten der vorliegenden Erfindung ergeben sich aus den im Folgenden beschriebenen Ausführungsbeispielen sowie anhand der Zeichnungen. Diese sind schematische Darstellungen und zeigen:
- Fig. 1: eine Draufsicht auf ein erstes Ausführungsbeispiel des erfindungsgemäßen Rotorblechs;
- Fig. 2: eine Detailansicht eines ersten Halbsektors eines Sektors des in Fig. 2 gezeigten Rotorblechs;
- Fig. 3 bis 8: jeweils einen ersten Halbsektor eines Sektors eines weiteren Ausführungsbeispiels des erfindungsgemäßen Rotorblechs;
- Fig. 9: eine Prinzipskizze eines Fahrzeugs mit einem Ausführungsbeispiel der erfindungsgemäßen elektrischen Maschine mit einem Ausführungsbeispiel des erfindungsgemäßen Rotors; und
- Fig. 10: einen ersten Halbsektor eines Sektors eines Rotorblechs des in Fig. 9 gezeigten Rotors mit Magnetelementen.

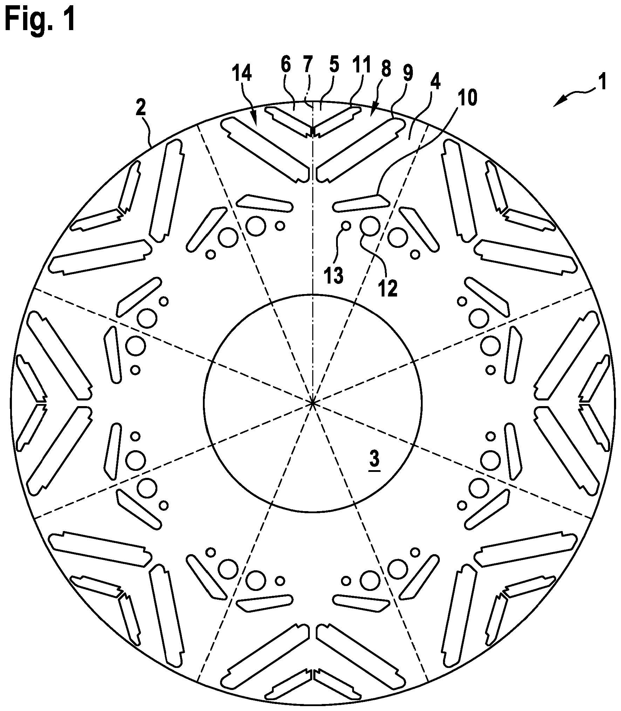

Fig. 1 ist eine Draufsicht auf ein erstes Ausführungsbeispiel eines Rotorblechs 1.

Das Rotorblech 1 weist eine kreisrunde Außenkontur 2 und eine zentrale Ausnehmung 3 auf. Das Rotorblech 1 ist in acht Sektoren 4 untergliedert, die unmittelbar aneinandergrenzen. Jeder Sektor 4 nimmt damit 45° des gesamten Rotorblechs 1 ein. Die Sektoren 4 sind jeweils in einen ersten Halbsektor 5 und in einen zweiten Halbsektor 6 entlang einer radialen Zentrallinie 7 geteilt. Dabei ist im ersten Halbsektor 5 eine erste Durchgangsöffnungsanordnung 8 vorgesehen, die eine ersten Magnettaschendurchgangsöffnung 9, eine Entlastungsdurchgangsöffnung 10, eine zweite Magnettaschendurchgangsöffnung 11, eine erste Auswuchtungsdurchgangsöffnung 12 und eine zweite Auswuchtungsdurchgangsöffnung 13 umfasst.

Im zweiten Halbsektor 6 ist eine weitere Durchgangsöffnungsanordnung 14 vorgesehen, die bezüglich der Zentrallinie 7 spiegelsymmetrisch zur ersten Durchgangsöffnungsanordnung 8 des ersten Halbsektors 5 ist. Dass die Durchgangsöffnungsanordnungen 8, 14 spiegelsymmetrisch zueinander sind bedeutet indes nicht, dass die Halbsektoren 5, 6 insgesamt spiegelsymmetrisch zueinander sein müssen, auch wenn dies im Ausführungsbeispiel gemäß Fig. 1 der Fall ist. Insbesondere kann die Ausnehmung 3 im Hinblick auf eine vorgesehene Befestigung an einer Welle auch nicht kreisförmig sein und beispielsweise gerade Abflachungen an zwei gegenüberliegenden Seiten aufweisen. Dementsprechend müssen auch nicht sämtliche Sektoren 4 identisch sein, obwohl dies im vorliegenden Ausführungsbeispiel der Fall ist. Die zuvor erwähnte Spiegelsymmetrie bezieht sich somit ausschließlich auf die Lage von zu den Durchgangsöffnungsanordnungen 8, 14 gehörenden Durchgangsöffnungen im ersten Halbsektor 5 bzw. im zweiten Halbsektor 6.

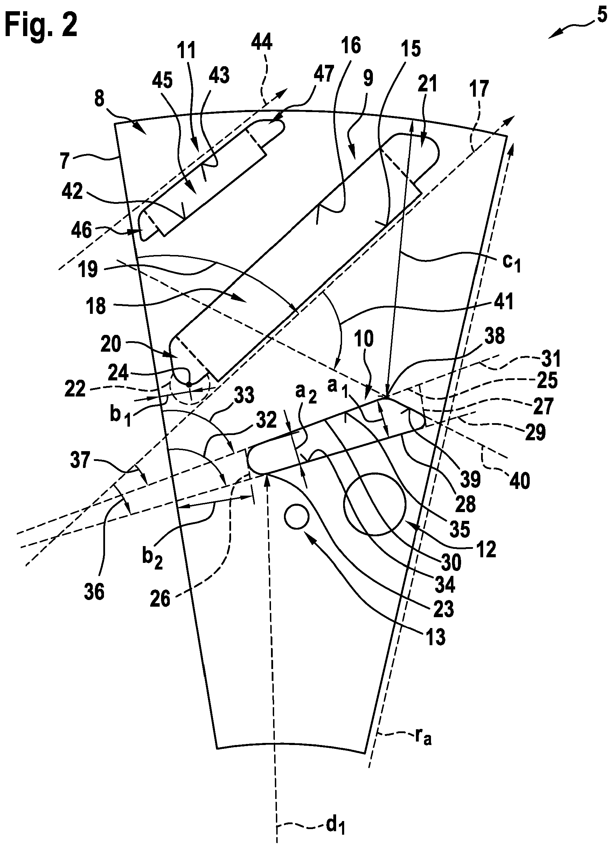

Fig. 2 ist eine Detailansicht des ersten Halbsektors 5 eines der Sektoren 4 in Fig. 1. Aufgrund der Spiegelsymmetrie der Durchgangsöffnungsanordnungen 8, 14 lassen sich die Ausführungen zum ersten Halbsektor 5 entsprechend auf den zweiten Halbsektor 6 übertragen. Ebenso können die Ausführungen zum Sektor 4 auf die anderen Sektoren übertragen werden.

Die erste Magnettaschendurchgangsöffnung 9 weist zwei parallele Randlinien 15, 16 auf, die sich entlang einer Erstreckungsrichtung 17 erstrecken und einen im Wesentlichen rechteckigen Aufnahmeraum 18 begrenzen. Die Erstreckungsrichtung 17 hat dabei einen Magnettaschenwinkelabstand 19 zur Zentrallinie 7. An den Aufnahmeraum 18 schließen sich zentrallinienseitig ein erster Freiraum 20 und auf der gegenüberliegenden Seite ein zweiter Freiraum 21 an, welche durch an die Randlinien 15, 16 anschließende Randkontouren mit einem zumindest abschnittsweise bogenförmigen Verlauf begrenzt sind.

Bei einem Betrieb einer elektrischen Maschine, die ein durch das Rotorblech 1 gebildetes Blechpaket aufweist treten in einem Bereich 22 lokale mechanische Spannungsüberhöhungen auf, die aus Zentrifugalkräften eines den Aufnahmeraum 18 ausführenden Magnetelements und aus dem Eigengewicht des Rotorblechs 1 resultieren. Da der Bereich 22 wegen der geringen Materialstärke des Rotorblechs 1 zwischen der Magnettaschendurchgangsöffnung 9 im ersten Halbsektor 5 und der spiegelsymmetrischen Magnettaschendurchgangsöffnung im zweiten Halbsektor 6 strukturell schwach ist, existiert eine maximale Drehzahl, bis zu der das Rotorblech der Belastung durch die Zentrifugalkräfte und einer zusätzlichen auch in einem ruhenden Zustand vorliegenden Spannung durch einen Presssitz in der Ausnehmung 3, standhalten kann. Die Entlastungsdurchgangsöffnung 10 ermöglicht eine Reduzierung der mechanischen Spannungen im Bereich 22 gegenüber einem herkömmlichen Rotorblech ohne eine solche Entlastungsdurchgangsöffnung 10.

Die Entlastungsdurchgangsöffnung 10 liegt vollständig im ersten Halbsektor 5. Ihr radial innerster Punkt 23 liegt radial weiter innen als der radial innerste Punkt 24 der Magnettaschendurchgangsöffnung 9. Die Entlastungsdurchgangsöffnung ist in ein inkreisfreies Trapez 25 einbeschrieben. Das Trapez 25 weist zwei zur Zentrallinie 7 parallele Grundseiten 26, 27 auf, wobei eine erste Grundseite 26 näher an der Zentrallinie 7 liegt als eine zweite Grundseite 27. Ein erster Schenkel 28 des Trapezes 25 erstreckt sich auf einer ersten Geraden 29 und ein zweiter Schenkel 30 des Trapezes 25 auf einer zweiten Geraden 31. Die Geraden 29, 31 schneiden sich auf Seiten der Zentrallinie 7 unter einem spitzen Winkel, wobei ein erster Winkelabstand 32 der ersten Geraden 29 von der Zentrallinie 7 größer als ein zweiter Winkelabstand 33 der zweiten Geraden 31 von der Zentrallinie 7 und größer als der Magnettaschenwinkelabstand 19 ist. Auch der zweite Winkelabstand 32 ist größer als der Magnettaschenwinkelabstand 19.

Die Entlastungsdurchgangsöffnung 10 weist eine erste Randlinie 34, die sich entlang eines Teils der ersten Geraden 29 erstreckt, und eine zweite Randlinie 35 auf, die sich entlang eines Teils der zweiten Geraden 31 erstreckt. Ein Verhältnis a₁/a₂ einer größten Strecke a₁, die lotrecht auf der ersten Randlinie 34 errichtet ist und auf der zweiten Randlinie 35 endet, zu einer kleinsten Strecke a₂, die lotrecht auf der ersten Randlinie 34 errichtet ist und auf der zweiten Randlinie 35 endet, beträgt im vorliegenden Ausführungsbeispiel 1,38. Ferner beträgt eine Differenz 36 zwischen dem ersten Winkelabstand 33 und dem Magnettaschenwinkelabstand 19 27° und eine Differenz 37 zwischen dem zweiten Winkelabstand 33 und dem Magnettaschenwinkelabstand 19 22°.

Daneben sind in Fig. 2 ein Abstand b₁ des radial innersten Punktes 24 der ersten Magnettaschendurchgangsöffnung zur Zentrallinie 19 und ein Abstand b₂ der ersten Grundseite 26 zur Zentrallinie 7 eingezeichnet, wobei ein Verhältnis b₂/b₁ im vorliegenden Ausführungsbeispiel 2,1 beträgt.

In Fig. 2 ist ferner ein äußerer Radialabstand c₁ des radial äußersten Punkts 38 der Entlastungsdurchgangsöffnung 10 eingezeichnet. Ein Verhältnis c₁/rₐ des Radialabstands c₁ zum Außenradius rₐ des Rotorblechs 1 beträgt vorliegend 0,28.

Fig. 2 zeigt ferner einen inneren Radialabstand d₁ des radial innersten Punktes 24 der Entlastungsdurchgangsöffnung 10, wobei ein Verhältnis d₁/rₐ des inneren Radialabstands d₁ zum Außenradius rₐ des Rotorblechs 1 0,65 beträgt.

Die Entlastungsdurchgangsöffnung 10 weist darüber hinaus eine dritte Randlinie 39 auf, die auf einem Teil einer dritten Geraden 40 liegt, die den zweiten Schenkel 25 und die zweite Grundseite 27 schneidet. Ein dritter Winkelabstand 41 der dritten Geraden 40 von der Erstreckungsrichtung 17 der Magnettaschendurchgangsöffnung 9 beträgt vorliegend 67°.

Die zweite Magnettaschendurchgangsöffnung 11 weist ebenfalls zwei parallele Randlinien 42, 43 auf, welche sich entlang einer zweiten Erstreckungsrichtung 44 erstrecken. Dabei wird die Zentrallinie 7 von Geraden (nicht gezeigt), auf den jeweils eine Randlinie 15, 17 der ersten Magnettaschendurchgangsöffnung 9 liegt, weiter innen als durch Geraden (nicht gezeigt) geschnitten, auf denen die Randlinien 42, 43 der zweiten Magnettaschendurchgangsöffnung 11 liegen. Die zweite Magnettaschendurchgangsöffnung 11 liegt insoweit weiter außen als die erste Magnettaschendurchgangsöffnung 9. Im Übrigen ist auch ein Aufnahmeraum 45 der zweiten Magnettaschendurchgangsöffnung 11 kleiner als jener der ersten Magnettaschendurchgangsöffnung 9. Die zweite Magnettaschendurchgangsöffnung 11 weist darüber hinaus auch an den Aufnahmeraum 45 anschließende Freiräume 46, 47 auf.

Die Auswuchtungsdurchgangsöffnungen 12, 13 liegen jeweils weiter innen als die erste Entlastungsdurchgangsöffnung 9 und sind kreisrund, wobei ein Mittelpunkt der ersten Auswuchtungsdurchgangsöffnung 12 weiter außen liegt ein Mittelpunkt der zweiten Auswuchtungsdurchgangsöffnung 13

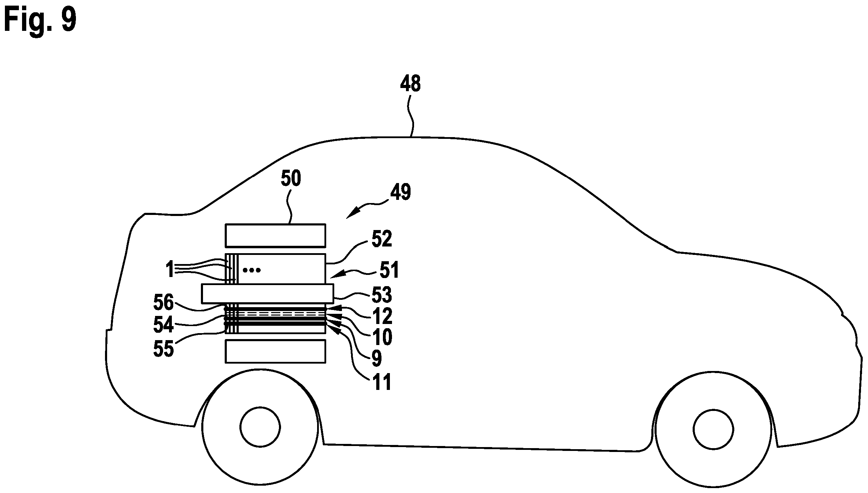

Bei Verwendung des Rotorblechs 1 gemäß den Fig. 1 und Fig. 2 tritt in einer exemplarischen Konfiguration einer elektrischen Maschine, wie sie beispielsweise in Fig. 9 gezeigt ist, bei einer Drehzahl von 16.800 min⁻¹ im Bereich 22 eine maximale mechanische Spannung von 419,64 MPa auf.

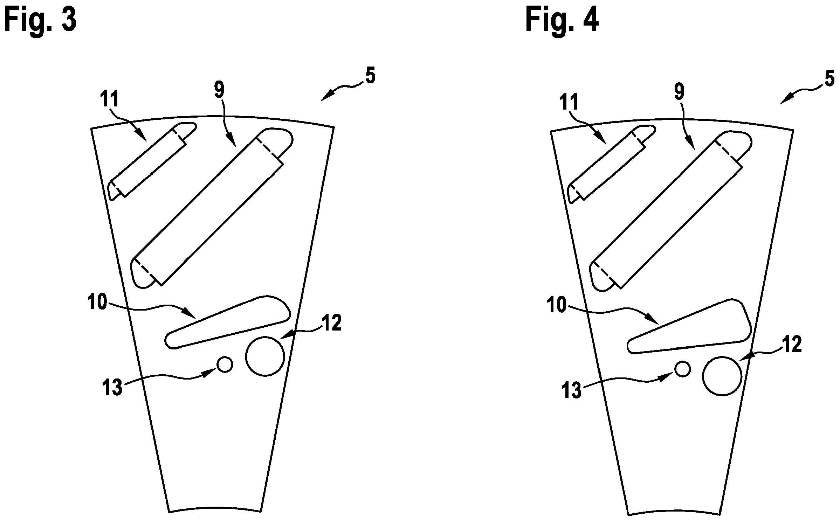

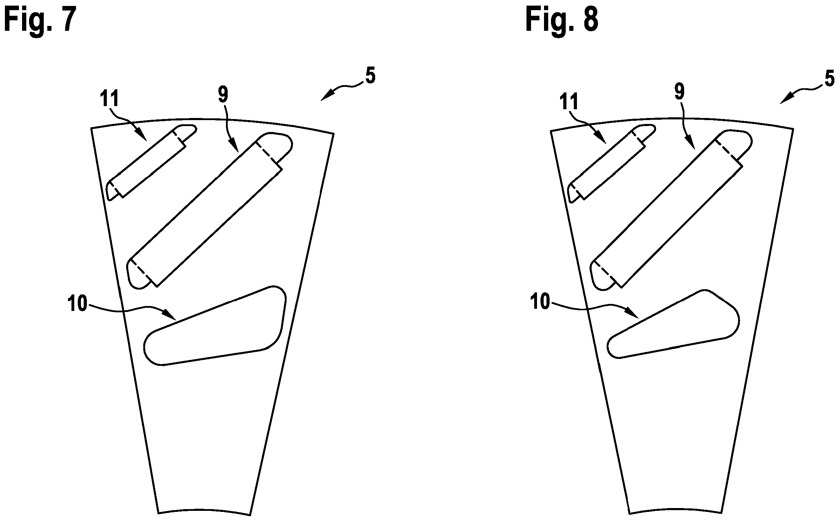

Fig. 3 bis Fig. 8 zeigen jeweils einen ersten Halbsektor 5 eines Sektors eines weiteren Ausführungsbeispiels eines Rotorblechs, wobei gleiche oder gleichwirkende Komponenten mit identischen Bezugszeichen versehen sind. Dabei entsprechen die Magnettaschendurchgangsöffnungen 9, 11 jenen des ersten Ausführungsbeispiels.

Bei den Ausführungsbeispielen gemäß Fig. 3 bis Fig. 8 weisen die jeweiligen Entlastungsdurchgangsöffnung 10 unterschiedliche Geometrien auf. Diese werden anhand der folgenden Tabelle mit Bezug auf die in Fig. 2 gezeigten Parameter beschrieben, wobei zusätzlich die maximale mechanische Spannung σₘₐₓ im Bereich 22 bei der zuvor beschriebenen exemplarischen Konfiguration angegeben ist:

| | Fig. 3 | Fig. 4 | Fig. 5 | Fig. 6 | Fig. 7 | Fig. 8 |
|---|---|---|---|---|---|---|
| a₂/a₁ | 1,75 | 2,57 | 1,80 | 2,11 | 1,65 | 2,20 |
| Differenz 36 | 30° | 38° | 37° | 36° | 34° | 34° |
| Differenz 37 | 22° | 22° | 23° | 23° | 21° | 17° |
| b₂/b₁ | 1,30 | 1,30 | 1,00 | 1,00 | 0,67 | 2,00 |
| c₁/rₐ | 0,29 | 0,28 | 0,28 | 0,28 | 0,26 | 0,28 |
| d₁/rₐ | 0,63 | 0,63 | 0,60 | 0,62 | 0,60 | 0,61 |
| Winkelabstand 41 | 103° | 116° | 108° | 115° | 140° | 140° |
| σₘₐₓ in MPa | 422,53 | 436,42 | 458,80 | 462,72 | 466,36 | 469,08 |

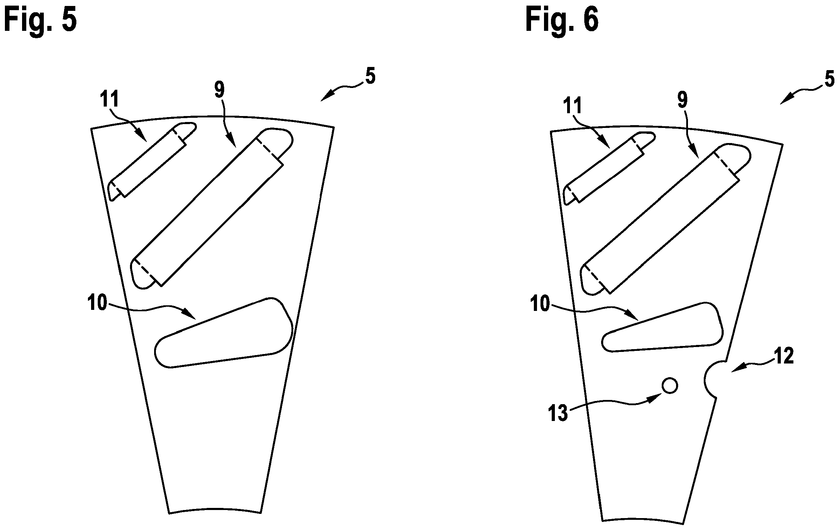

Im Übrigen zeigt Fig. 4 eine alternative Ausgestaltung der Anordnung der Auswuchtungsdurchgangsöffnungen 12, 13, die sich auf die übrigen Ausführungsbeispiele übertragen lässt. Bei dem Ausführungsbeispiel gemäß Fig. 6 ist die Auswuchtungsdurchgangsöffnung 12 halbkreisförmig und ergänzt sich mit einer Auswuchtungsdurchgangsöffnung des zweiten Halbsektors 6 eines benachbarten Sektors 4, was sich ebenfalls auf die übrigen Ausführungsbeispiele übertragen lässt. Bei den Ausführungsbeispielen gemäß Fig. 5, Fig. 7 und Fig. 8 wird auf Auswuchtungsdurchgangsöffnungen verzichtet. Es können alternativ jedoch auch solche gemäß den übrigen Ausführungsbeispielen vorgesehen sein.

Fig. 9 ist eine Prinzipskizze eines Fahrzeugs 48 mit einem Ausführungsbeispiel einer permanenterregten elektrischen Maschine 49.

Die elektrische Maschine 49 ist zum Antreiben des Fahrzeugs 48 eingerichtet und umfasst einen Stator 50. Innerhalb des Stators 50 ist ein Rotor 51 drehbar gelagert, der ein Rotorblechpaket 52 und eine Welle 53 umfasst. Das Rotorblechpaket 52 ist aus einer Vielzahl von gleichartigen Rotorblechen 1 gemäßen einem der zuvor beschriebenen Ausführungsbeispiele gebildet. Die Rotorbleche 1 sind derart übereinandergeschichtet, dass ihre Durchgangsöffnungsanordnungen 8, 14 deckungsgleich sind. Die Rotorbleche sind ferner voneinander elektrisch isolierend laminiert.

Fig. 9 zeigt ferner ein erstes Magnetelement 54, das die ersten Magnettaschendurchgangsöffnungen 9 durchsetzt, und ein zweites Magnetelement 55, das die zweiten Magnettaschendurchgangsöffnungen 11 durchsetzt. Die Entlastungsdurchgangsöffnungen 10 bleiben frei.

Im Rahmen der Herstellung des Rotors 51 wird in die ersten Auswuchtungsdurchgangsöffnungen 12 eines oder mehrerer Sektoren 4 ist ein Auswuchtungsgewicht 56 eingebracht, wodurch der Rotor 51 positiv ausgewuchtet wird. Alternativ oder zusätzlich können im Rahmen der Herstellung des Rotors 51 Durchgangsöffnungen in die bereits zum Rotorblechpaket 52 geschichteten Rotorbleche 1 eingebracht werden, um den Rotor 51 negativ auszuwuchten.

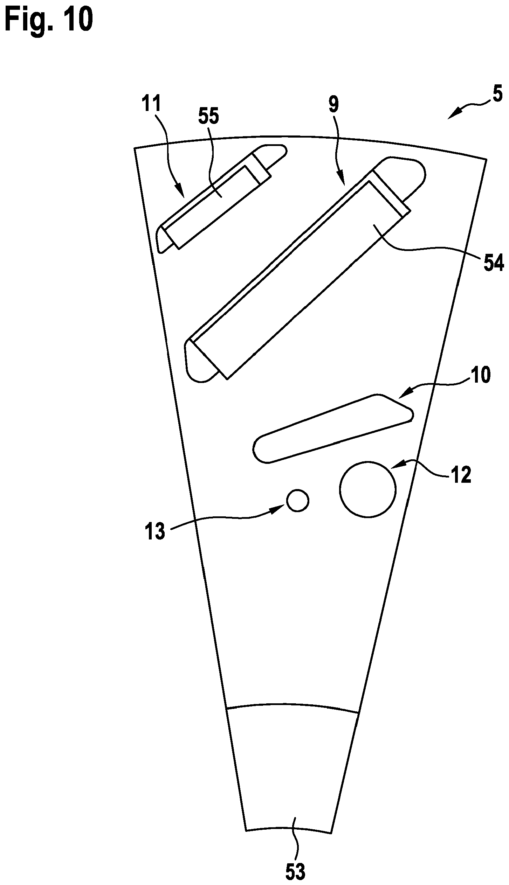

Fig. 10 zeigt schließlich den ersten Halbsektor 5 gemäß Fig. 2 in einem verbauten Zustand im Rotor 51, so dass die Lage der Magnetelemente 54, 55 und der Welle 53 sichtbar ist.

## Patentansprüche

1. Rotorblech (1) für eine permanenterregte elektrische Maschine (49), das eine zentrale Ausnehmung (3) für eine Welle (53) aufweist und in eine Mehrzahl von Sektoren (4) mit jeweils einem ersten Halbsektor (5) und einem durch eine radiale Zentrallinie (7) vom ersten Halbsektor (5) abgegrenzten zweiten Halbsektor (6) untergliedert ist, wobei innerhalb des ersten Halbsektors (5) eine erste Durchgangsöffnungsanordnung (8) mit einer Magnettaschendurchgangsöffnung (9), die zwei parallele, sich entlang einer Erstreckungsrichtung (17) erstreckende Randlinien (15, 16) aufweist, ausgebildet ist und innerhalb des zweiten Halbsektors (6) eine zur Durchgangsöffnungsanordnung (8) bezüglich der Zentrallinie (7) spiegelsymmetrische weitere Durchgangsöffnungsanordnung (14) ausgebildet ist, wobei die erste Durchgangsöffnungsanordnung (8) eine vollständig im ersten Halbsektor (5) liegende Entlastungsdurchgangsöffnung (10) aufweist, deren radial innerster Punkt (23) weiter innen als ein radial innerster Punkt (24) der Magnettaschendurchgangsöffnung (9) liegt, wobei die Entlastungsdurchgangsöffnung (10) in ein inkreisfreies Trapez (15) mit zwei parallel zur Zentrallinie (7) verlaufenden Grundseiten (26, 27), von denen eine erste Grundseite (26) näher an der Zentrallinie (7) liegt als eine zweite Grundseite (27), einem ersten Schenkel (28), der sich auf einer einen ersten Winkelabstand (32) von der Zentrallinie (7) aufweisenden ersten Geraden (29) erstreckt, und einem zweiten Schenkel (30), der sich auf einer einen zweiten Winkelabstand (33) von der Zentrallinie (7) aufweisenden zweiten Geraden (31) erstreckt, einbeschrieben ist, wobei sich die erste Gerade (29) und die zweite Gerade (31) auf Seiten der ersten Grundseite (26) unter einem spitzen Winkel schneiden und der erste Winkelabstand (32) und der zweite Winkelabstand (33) jeweils größer als ein Magnettaschenwinkelabstand (19) der Erstreckungsrichtung (17) von der Zentrallinie (7) sind,
**dadurch gekennzeichnet, dass**
die Entlastungsdurchgangsöffnung (10) eine erste Randlinie (34) aufweist, die sich zumindest entlang eines Teils der ersten Geraden (29) erstreckt, und/oder eine zweite Randlinie (35) aufweist, die sich zumindest entlang eines Teils der zweiten Geraden (31) erstreckt.

2. Rotorblech nach Anspruch 1, wobei ein Verhältnis (a₂/a₁) einer größten Strecke (a₂), die lotrecht auf der ersten Randlinie (34) errichtetet ist und auf der zweiten Randlinie (35) endet, zu einer kleinsten Strecke (a₁), die lotrecht auf der ersten Randlinie (34) errichtetet ist und auf der zweiten Randlinie (35) endet,
- wenigstens 1,00, bevorzugt wenigstens 1,15, besonders bevorzugt wenigstens 1,30, und/oder
- höchstens 2,60, bevorzugt höchstens 2,10, besonders bevorzugt höchstens 1,85,
beträgt.

3. Rotorblech nach Anspruch 1 oder 2, wobei
eine Differenz (36) zwischen dem ersten Winkelabstand (32) und dem Magnettaschenwinkelabstand (19)
- wenigstens 23,5°, bevorzugt wenigstens 25°, besonders bevorzugt wenigstens 26,5°, und/oder
- höchstens 45°, bevorzugt höchstens 38°, besonders bevorzugt höchstens 31°,
beträgt und/oder
eine Differenz (37) zwischen dem zweiten Winkelabstand (33) und dem Magnettaschenwinkelabstand (19)
- wenigstens 12°, bevorzugt wenigstens 15°, besonders bevorzugt wenigstens 21°, und/oder
- höchstens 30°, bevorzugt höchstens 25°, besonders bevorzugt höchstens 24°,
beträgt.

4. Rotorblech nach einem der vorhergehenden Ansprüche, wobei ein Verhältnis (b₂/b₁) eines Abstands (b₂) der ersten Grundseite (26) von der Zentrallinie (7) zu einem Abstand (b₁) des radial innersten Punkt (24) der Magnettaschendurchgangsöffnung (9) von der Zentrallinie (7)
- wenigstens 0,60, bevorzugt wenigstens 1,2, besonders bevorzugt wenigstens 1,9, und/oder
- höchstens 2,5, bevorzugt höchstens 2,3, besonders bevorzugt höchstens 2,2,
beträgt.

5. Rotorblech nach einem der vorhergehenden Ansprüche, wobei ein Verhältnis (c₁/rₐ) eines äußeren Radialabstands (c₁) des radial äußersten Punkts (38) der Entlastungsdurchgangsöffnung (10) zu einem Außenradius (rₐ) des Rotorblechs (1)
- wenigstens 0,21, bevorzugt wenigstens 0,25, besonders bevorzugt wenigstens 0,27, und/oder
- höchstens 0,32, bevorzugt höchstens 0,30, besonders bevorzugt höchstens 0,29,
beträgt.

6. Rotorblech nach einem der vorhergehenden Ansprüche, wobei ein Verhältnis (d₁/rₐ) eines inneren Radialabstands (d₁) des radial innersten Punkts (23) der Entlastungsdurchgangsöffnung (10) zu einem Außenradius (rₐ) des Rotorblechs (1)
- wenigstens 0,55, bevorzugt wenigstens 0,60, besonders bevorzugt wenigstens 0,62, und/oder
- höchstens 0,70, bevorzugt höchstens 0,68, besonders bevorzugt höchstens 0,65,
beträgt.

7. Rotorblech nach einem der vorhergehenden Ansprüche, wobei die Entlastungsdurchgangsöffnung (10) eine weitere Randlinie (39) aufweist, die auf zumindest einem Teil einer dritten Geraden (40) liegt, die den zweiten Schenkel (30) und die zweite Grundseite (27) schneidet.

8. Rotorblech nach einem der vorhergehenden Ansprüche, wobei die erste Durchgangsöffnungsanordnung (8), eine weitere Magnettaschendurchgangsöffnung (11) die zwei parallele, sich entlang einer weiteren Erstreckungsrichtung (44) erstreckende Randlinien (42, 43) aufweist, wobei Geraden, auf denen jeweils eine Randlinie (42, 43) der weiteren Magnettaschendurchgangsöffnung (11) liegt, die Zentrallinie (7) radial weiter außen schneiden als Geraden, auf denen jeweils eine Randlinie (15, 16) der ersten Magnettaschendurchgangsöffnung (9) liegt.

9. Rotorblech nach einem der vorhergehenden Ansprüche, umfassend wenigstens eine, insbesondere zur ersten Durchgangsöffnungsanordnung (8) gehörende, Auswuchtungsdurchgangsöffnung (12,13), deren radial innerster Punkt weiter innen liegt als der radial innerste Punkt (23) der Entlastungsdurchgangsöffnung (10).

10. Rotor (51) für eine permanenterregte elektrische Maschine (49), umfassend ein durch mehrere geschichtete Rotorbleche (1) nach einem der vorhergehenden Ansprüche gebildetes Rotorblechpaket (52), wobei innerhalb einer jeweiligen durch übereinanderliegende Magnettaschendurchgangsöffnungen (9, 11) gebildeten Magnettasche ein permanentmagnetisches Magnetelement (54, 55) angeordnet ist.

11. Elektrische Maschine (49) für ein Fahrzeug (48), umfassend einen Stator (50) und einen drehbar bezüglich des Stators gelagerten Rotor (51) nach Anspruch 10.

12. Verfahren zur Herstellung eines Rotors (51) für eine permanenterregte elektrische Maschine (49), wobei mehrere Rotorbleche (1) nach einem der Ansprüche 1 bis 9 derart zu einem Rotorblechpaket (52) angeordnet werden, dass jeweilige Durchgangsöffnungsanordnungen (8, 14) deckungsgleich sind.

13. Verfahren nach Anspruch 12, wobei ein Rotorblech nach Anspruch 9 verwendet wird, wobei das Rotorblechpaket (52) durch Einbringen wenigstens eines Auswuchtungsgewichts (56) in die Auswuchtungsdurchgangsöffnungen (12, 13) wenigstens einer Durchgangsöffnungsanordnung (8, 14) eines jeweiligen Rotorblechs (1) ausgewuchtet wird.

14. Verfahren nach Anspruch 12 oder 13, wobei das Rotorblechpaket (52) durch Ausbilden wenigstens einer Durchgangsöffnung durch die angeordneten Rotorbleche (1) ausgewuchtet wird.

## Claims

1. Rotor plate (1) for a permanently excited electrical machine (49), which has a central recess (3) for a shaft (53) and is subdivided into a plurality of sectors (4), each having a first half-sector (5) and a second half-sector (6) delimited from the first half-sector (5) by a radial central line (7), a first passage opening arrangement (8) with a magnetic pocket through-opening (9) being formed within the first half-sector (5), which has two parallel edge lines (15, 16) extending along an extension direction (17), and a further passage opening arrangement (14) which is mirror-symmetrical with respect to the passage opening arrangement (8) with respect to the central line (7) being formed within the second half-sector (6), the first passage opening arrangement (8) having a relief passage opening (10) which is located completely in the first half-sector (5) and the radially innermost point (23) of which lies further inwards than a radially innermost point (24) of the magnetic pocket through-opening (9), wherein the relief passage opening (10) is formed into an incircle-free trapezium (15) with two base sides (26, 27), of which a first base side (26) is closer to the center line (7) than a second base side (27), a first leg (28) extending on a first straight line (29) having a first angular distance (32) from the center line (7) and a second leg (30) extending on a second straight line (31) having a second angular distance (33) from the central line (7), wherein the first straight line (29) and the second straight line (31) intersect at an acute angle on sides of the first base side (26), and the first angular distance (32) and the second angular distance (33) are each greater than a magnetic pocket angular distance (19) of the extension direction (17) from the center line (7),
**characterized in that**
the relief passage opening (10) has a first edge line (34) extending along at least a portion of the first straight line (29) and/or has a second edge line (35) extending along at least a portion of the second straight line (31).

2. Rotor plate according to claim 1, wherein a ratio (a₂/a₁) of a largest distance (a₂) erected perpendicularly on the first edge line (34) and ending on the second edge line (35) to a smallest distance (a₁) erected perpendicularly on the first edge line (34) and ending on the second edge line (35) is
- at least 1.00, preferably at least 1.15, particularly preferably at least 1.30, and/or
- at most 2.60, preferably at most 2.10, particularly preferably at most 1.85.

3. Rotor plate according to claim 1 or 2, wherein
a difference (36) between the first angular distance (32) and the magnetic pocket angular distance (19) is
- at least 23.5°, preferably at least 25°, particularly preferably at least 26.5°, and/or
- at most 45°, preferably at most 38°, particularly preferably at most 31°,
and/or
a difference (37) between the second angular distance (33) and the magnetic pocket angular distance (19) is
- at least 12°, preferably at least 15°, particularly preferably at least 21°, and/or
- at most 30°, preferably at most 25°, particularly preferably at most 24°.

4. Rotor plate according to any one of the preceding claims, wherein a ratio (b₂/b₁) of a distance (b₂) of the first base side (26) from the center line (7) to a distance (b₁) of the radially innermost point (24) of the magnetic pocket passage opening (9) from the center line (7) is
- at least 0.60, preferably at least 1.2, particularly preferably at least 1.9, and/or
- not more than 2.5, preferably not more than 2.3, particularly preferably not more than 2.2.

5. Rotor plate according to any one of the preceding claims, wherein a ratio (c₁/rₐ) of an outer radial distance (c₁) of the radially outermost point (38) of the relief passage opening (10) to an outer radius (rₐ) of the rotor plate (1) is
- at least 0.21, preferably at least 0.25, particularly preferably at least 0.27, and/or
- not more than 0.32, preferably not more than 0.30, particularly preferably not more than 0.29.

6. Rotor plate according to any one of the preceding claims, wherein a ratio (d₁/rₐ) of an inner radial distance (d₁) of the radially innermost point (23) of the relief passage opening (10) to an outer radius (rₐ) of the rotor plate (1) is
- at least 0.55, preferably at least 0.60, particularly preferably at least 0.62, and/or
- not more than 0.70, preferably not more than 0.68, particularly preferably not more than 0.65.

7. Rotor plate according to any one of the preceding claims, wherein the relief passage opening (10) has a further edge line (39) lying on at least part of a third straight line (40) intersecting the second leg (30) and the second base side (27).

8. Rotor plate according to any one of the preceding claims, wherein the first passage opening arrangement (8) comprises a further magnetic pocket through-opening (11) which has two parallel edge lines (42, 43) extending along a further direction of extension (44), wherein straight lines on which in each case one edge line (42, 43) of the further magnetic pocket through-opening (11) lies, intersect the center line (7) radially further outwardly than straight lines on which in each case one edge line (15, 16) of the first magnetic pocket through-opening (9) lies.

9. Rotor plate according to any one of the preceding claims, comprising at least one balancing passage opening (12, 13), in particular belonging to the first passage opening arrangement (8), the radially innermost point of which lies further inwards than the radially innermost point (23) of the relief passage opening (10).

10. Rotor (51) for a permanently excited electric machine (49), comprising a rotor plate stack (52) formed by a plurality of laminated rotor plates (1) according to any one of the preceding claims, wherein a permanent-magnetic magnetic element (54, 55) is disposed within a respective magnetic pocket formed by superposed magnetic pocket passage openings (9, 11).

11. Electric machine (49) for a vehicle (48) comprising a stator (50) and a rotor (51) according to claim 10 rotatably supported with respect to the stator.

12. Method of manufacturing a rotor (51) for a permanently excited electric machine (49), wherein a plurality of rotor plates (1) according to any one of claims 1 to 9 are arranged to form a rotor plate stack (52) in such a way that respective passage opening arrangements (8, 14) are congruent.

13. Method according to claim 12, wherein a rotor plate according to claim 9 is used, wherein the rotor plate stack (52) is balanced by introducing at least one balancing weight (56) into the balancing passage openings (12, 13) of at least one passage opening arrangement (8, 14) of a respective rotor plate (1).

14. Method according to claim 12 or 13, wherein the rotor plate stack (52) is balanced by forming at least one through opening through the arranged rotor plates (1).

## Revendications

1. Tôle de rotor (1) pour une machine électrique à excitation permanente (49) qui comporte une cavité centrale (3) pour un arbre (53) et qui est subdivisée en une pluralité de secteurs (4) avec respectivement un premier demi-secteur (5) et un deuxième demi-secteur (6) délimité du premier demi-secteur (5) par une ligne centrale (7) radiale, en ce qu'à l'intérieur du premier demi-secteur (5) est réalisé un premier arrangement d'ouvertures de passage (8) avec une ouverture de passage de poches magnétiques (9), qui comporte deux lignes frontières (15, 16) parallèles s'étendant le long d'un sens d'extension (17), et à l'intérieur du deuxième demi-secteur (6) est réalisé un autre arrangement d'ouvertures de passage (14) de symétrie axiale à l'arrangement d'ouvertures de passage (8) par rapport à la ligne centrale (7), en ce que le premier arrangement d'ouvertures de passage (8) comporte une ouverture de passage de décharge (10) se trouvant entièrement dans le premier demi-secteur (5), dont le point radialement le plus intérieur (23) se trouve plus à l'intérieur qu'un point radialement le plus intérieur (24) de l'ouverture de passage de poches magnétiques (9), en ce que l'ouverture de passage de décharge (10) est inscrite dans un trapèze sans cercle inscrit (15) avec deux côtés de base (26, 27) parallèles à la ligne centrale (7), dont un premier côté de base (26) est plus près de la ligne centrale (7) qu'un deuxième côté de base (27), avec un premier côté (28) qui s'étend sur une première droite présentant une première distance angulaire (32) de la ligne centrale (7), et un deuxième côté (30) qui s'étend sur une deuxième droite (31) présentant une deuxième distance angulaire (33) de la ligne centrale (7), en ce que la première droite (29) et la deuxième droite (31) se coupent en formant un angle aigu sur des côtés du premier côté de base (26) et la première distance angulaire (32) et la deuxième distance angulaire (33) sont respectivement supérieures à une distance angulaire de poche magnétique (19) du sens d'extension (17) depuis la ligne centrale (7),
**caractérisée en ce que**
l'ouverture de passage de décharge (10) comporte une première ligne frontière (34) qui s'étend au moins le long d'une partie de la première droite (29), et/ou comporte une deuxième ligne frontière (35) qui s'étend au moins le long d'une partie de la deuxième droite (31).

2. Tôle de rotor selon la revendication 1, en ce qu'un rapport (a₂/a₁) d'un plus grand segment (a₂), qui est formé perpendiculairement sur la première ligne frontière (34) et qui se termine sur la deuxième ligne frontière (35), par rapport à un plus petit segment (a₁) qui est formé perpendiculairement sur la première ligne frontière (34) et qui se termine sur la deuxième ligne frontière (35),
- est au minimum 1,00, de préférence minimum 1,15, tout particulièrement minimum 1,30, et/ou
- est au maximum 2,60, de préférence maximum 2,10, tout particulièrement maximum 1,85.

3. Tôle de rotor selon la revendication 1 ou 2, en ce qu'
une différence (36) entre la première distance angulaire (32) et la distance angulaire de poche magnétique (19)
- est au minimum 23,5°, de préférence au minimum 25°, tout particulièrement au minimum 26,5°, et/ou
- est au maximum 45°, de préférence au maximum 38°, tout particulièrement au maximum 31°,
et/ou
une différence (37) entre la deuxième distance angulaire (33) et la distance angulaire de poche magnétique (19)
- est au minimum 12°, de préférence au minimum 15°, tout particulièrement au minimum 21°, et/ou
- est au maximum 30°, de préférence au maximum 25°, tout particulièrement au maximum 24°.

4. Tôle de rotor selon l'une des revendications précédentes, en ce qu'un rapport (b₂/b₁) d'une distance (b₂) du premier côté de base (26) depuis la ligne centrale (7) par rapport à une distance (b₁) du point radialement le plus intérieur (24) de l'ouverture de passage de poches magnétiques (9) depuis la ligne centrale (7)
- est au minimum 0,60, de préférence au minimum 1,2, tout particulièrement au minimum 1,9, et/ou
- est au maximum 2,5, de préférence au maximum 2,3, tout particulièrement au maximum 2,2.

5. Tôle de rotor selon l'une des revendications précédentes, en ce qu'un rapport (c₁/rₐ) d'une distance radiale extérieure (c₁) du point radialement le plus extérieur (38) de l'ouverture de passage de décharge (10) par rapport à un rayon extérieur (rₐ) de la tôle de rotor (1)
- est au minimum 0,21, de préférence au minimum 0,25, tout particulièrement au minimum 0,27, et/ou
- est au maximum 0,32, de préférence au maximum 0,30, tout particulièrement au maximum 0,29.

6. Tôle de rotor selon l'une des revendications précédentes, en ce qu'un rapport (d₁/rₐ) d'une distance radiale intérieure (d₁) du point radialement le plus intérieur (23) de l'ouverture de passage de décharge (10) par rapport à un rayon extérieur (rₐ) de la tôle de rotor (1)
- est au minimum 0,55, de préférence au minimum 0,60, tout particulièrement au minimum 0,62, et/ou
- est au maximum 0,70, de préférence au maximum 0,68, tout particulièrement au maximum 0,65.

7. Tôle de rotor selon l'une des revendications précédentes, en ce que l'ouverture de passage de décharge (10) comporte une autre ligne frontière (39) qui est au moins une partie d'une troisième droite (40) qui rencontre le deuxième côté (30) et le deuxième côté de base (27).

8. Tôle de rotor selon l'une des revendications précédentes, en ce que le premier arrangement d'ouvertures de passage (8) comporte une autre ouverture de passage de poches magnétiques (11), les deux lignes frontières (42, 43) parallèles, s'étendant le long d'un autre sens d'extension (44), en ce que des droites, sur lesquelles se trouve respectivement une ligne frontière (42, 43) de l'autre ouverture de passage de poches magnétiques (11), rencontrent radialement plus à l'extérieur la ligne centrale (7) en tant que droites sur lesquelles se trouve respectivement une ligne frontière (15, 16) de la première ouverture de poches magnétiques (9).

9. Tôle de rotor selon l'une des revendications précédentes, comprenant au moins une ouverture de passage d'équilibrage (12, 13) appartenant en particulier au premier arrangement d'ouvertures de passage (8) dont le point radialement le plus intérieur se situe davantage à l'intérieur que le point radialement le plus intérieur (23) de l'ouverture de passage de décharge (10).

10. Rotor (51) pour une machine électrique à excitation permanente (49) comprenant un paquet de tôles de rotor (52) formé par plusieurs tôles de rotor (1) superposées selon l'une des revendications précédentes, en ce qu'un élément magnétique (54, 55) à aimant permanent est disposé à l'intérieur de chaque poche magnétique formée par des ouvertures de passage de poches magnétiques (9, 11) superposées.

11. Machine électrique (49) pour un véhicule (48), comprenant un stator (50) et un rotor (51) monté à rotation par rapport au stator selon la revendication 10.

12. Procédé de fabrication d'un rotor (51) pour une machine électrique à excitation permanente (49), en ce que plusieurs tôles de rotor (1) selon l'une des revendications 1 à 9 sont disposées par rapport à un paquet de tôles de rotor (52) de telle manière que des arrangements d'ouvertures de passage (8, 14) correspondants coïncident.

13. Procédé selon la revendication 12, en ce qu'une tôle de rotor est utilisée selon la revendication 9, en ce que le paquet de tôles de rotor (52) est équilibré par introduction d'au moins une masse d'équilibrage (56) dans les ouvertures de passage d'équilibrage (12, 13) d'au moins un arrangement d'ouvertures de passage (8, 14) d'une tôle de rotor correspondante (1).

14. Procédé selon la revendication 12 ou 13, en ce que le paquet de tôles de rotor (52) est équilibré par formation d'au moins une ouverture de passage par les tôles de rotor (1) disposées.
